## Europäisches Patentamt
## European Patent Office
## Office européen des brevets

(19)

(11) Veröffentlichungsnummer: **0 363 926**
**A2**

(12)
# EUROPÄISCHE PATENTANMELDUNG

(21) Anmeldenummer: **89118886.4**

(22) Anmeldetag: **11.10.89**

(51) Int. Cl.5: **C01B 33/20 , C01B 33/34 , C01G 25/00 , C01F 7/00**

(30) Priorität: **12.10.88 DE 3834773**

(43) Veröffentlichungstag der Anmeldung:
**18.04.90 Patentblatt 90/16**

(84) Benannte Vertragsstaaten:
**AT BE DE FR GB NL**

(71) Anmelder: **FRAUNHOFER-GESELLSCHAFT ZUR FÖRDERUNG DER ANGEWANDTEN FORSCHUNG E.V.**
**Leonrodstrasse 54**
**D-8000 München 19(DE)**

(72) Erfinder: **Schmidt, Helmut, Dr.**
**Am Schlosssand 9**
**D-8705 Zellingen(DE)**
Erfinder: **Nass, Rüdiger, Dr.**
**Brückenstrasse 6**
**D-8705 Zellingen(DE)**
Erfinder: **Sporn, Dieter**
**Norbertstrasse**
**D-8706 Höchberg(DE)**

(74) Vertreter: **Barz, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-8000 München 40(DE)**

(54) **Teilchenförmige Polykondensate, Verfahren zu deren Herstellung und deren Verwendung.**

(57) Teilchenförmige Polykondensate werden über den Sol-Gel-Prozeß dadurch hergestellt, daß eine Sol-Gel-Reaktion (Polykondensation) mindestens einer ein anorganisches Netzwerk bildenden Verbindung in einem zweiphasigen System aus einer dispersen Reaktionsphase und einer damit im wesentlichen nicht-mischbaren kontinuierlichen Matrixbase durchgeführt wird. Das Verfahren ist dadurch gekennzeichnet, daß die Sol-Gel-Reaktion durch Zugabe von die Reaktion beeinflussenden oder daran teilnehmenden Steuerkomponenten über die Matrixphase gesteuert wird. Hierdurch lassen sich insbesondere kugelförmige Polykondensatteilchen herstellen, die z.B. als Glasfritten, keramische Schlicker oder in Druckfarben und Siebdruckpasten verwendbar sind.

# TEILCHENFÖRMIGE POLYKONDENSATE, VERFAHREN ZU DEREN HERSTELLUNG UND DEREN VERWENDUNG

Die Erfindung betrifft ein Verfahren zur Herstellung von teilchenförmigen, vorzugsweise kugelförmigen, Polykondensaten über den Sol-Gel-Prozeß, bei dem eine Sol-Gel-Reaktion (Polykondensation) mindestens einer ein anorganisches Netzwerk bildenden Verbindung in einem zweiphasigen System aus einer dispersen Reaktionsphase und einer damit im wesentlichen nicht-mischbaren, kontinuierlichen Matrixphase durchgeführt wird. Das erfindungsgemäße Verfahren ist dadurch gekennzeichnet, daß die Sol-Gel-Reaktion durch Zugabe von die Reaktion beeinflussenden oder daran teilnehmenden Steuerkomponenten über die Matrixphase gesteuert wird.

Im erfindungsgemäßen Verfahren erfolgt die Sol-Gel-Reaktion in den Tröpfchen einer Emulsion aus einer dispersen Reaktionsphase und einer damit im wesentlichen nicht-mischbaren, kontinuierlichen Matrixphase. Hierbei kann die Polykondensation in einer Ausführungsform analog der üblichen Emulsionspolymerisation durchgeführt werden, indem man für die disperse Reaktionsphase ein wässriges, alkoholisches (z.B. $C_{1-4}$-Alkanole, wie Methanol) oder wässrig-alkoholisches Lösungsmittel und für die kontinuierliche Matrixphase ein mit der Reaktionsphase im wesentlichen nicht-mischbares organisches Lösungsmittel verwendet, z.B. (gegebenenfalls halogenierte) aliphatische oder aromatische Kohlenwasserstoffe, wie Hexan, Heptan, Decan, Benzinfraktionen, Kerosin, Mineralöl, Benzol, Toluol oder Xylol; höhere Alkohole z.B. mit 6 bis 8 Kohlenstoffatomen; Ether; Ester; und Ketone. Das bevorzugte organische Lösungsmittel für die Matrixphase ist Petroleumbenzin.

In einer anderen Ausführungsform des erfindungsgemäßen Verfahrens erfolgt die Sol-Gel-Reaktion analog der reversen Emulsionspolymerisation in den Tröpfchen einer Emulsion, bei der für die disperse Reaktionsphase ein unpolares organisches Lösungmittel, in dem die Sol-Gel-Ausgangsverbindungen löslich sind, und für die kontinuierliche Matrixphase ein wässriges Lösungsmittel verwendet wird. Bevorzugte Lösungsmittel für die Reaktionsphase sind hierbei Kohlenwasserstoffe, wie Toluol, und Ester, wie Essigsäureester.

Als disperse Reaktionsphase können insbesondere bei der erstgenannten Ausführungsform auch nicht-lösungsmittelhaltige Sole eingesetzt werden. Für die kontinuierliche Matrixphase kann man darüber hinaus auch polymerisierbare organisches Monomere oder davon abgeleitete Oligomere einsetzen, z.B. (Meth)Acrylate, Epoxide, Olefine und Vinylmonomere.

Die Sol-Gel-Reaktion beeinflussende oder daran teilnehmende Steuerkomponente sind z.B. Wasser, Säuren, Basen oder katalytisch wirksame Komponenten, die in der Matrixphase löslich sind. Das Wasser kann hierbei als solches flüssig oder gasförmig zudosiert werden oder es entsteht in situ aus einem geeigneten Reaktionssystem, z.B. bei der Esterbildung aus einem Alkohol und einer Säure. Als Säuren und Basen eignen sich beliebige organische und anorganische Säuren und Basen oder Verbindungen, die unter Temperatureinwirkung Säuren oder Basen freisetzen. Beispielsweise können Urotropin oder Harnstoff zur Eindosierung von $NH_3$ eingesetzt werden. In einer speziellen Ausführungsform werden kationische oder anionische Phasentransferkatalysatoren dazu verwendet, die in den emulgierten Tröpfchen der Reaktionsphase vorhandenen Anionen (oder Kationen) durch Hydroxidionen (oder Protonen) zu ersetzen und dadurch eine Sol-Gel-Reaktion unter Bildung von teilchenförmigen Polykondensaten zu bewirken.

Als katalytisch wirksame Steuerkomponenten eignen sich vorzugsweise Salze, Verbindungen (z.B. Alkoxide) oder Komplexe von Übergangsmetallen, wie Ti, Cr und Ni, oder Anionen, wie $F^-$ oder $CH_3COO^-$.

In einer Variante des erfindungsgemäßen Verfahrens werden Steuerkomponenten eingesetzt, die in der Matrixphase nicht oder nur sehr wenig löslich sind, z.B. Wasser in Petroleumbenzin. Die Steuerkomponenten können über die Gasphase oder als Lösung in die Matrixphase eindosiert werden. Man kann aber auch die Steuerkomponenten in Form von schwerlöslichen, sich durch den Verbrauch nachlösenden Komponenten einsetzen. Schließlich können die Steuerkomponenten aus einem Vorratssystem zugeführt werden, vorzugsweise einem beladenen Adsorbens, einem Ionenaustauscher oder einer Membran.

Die Art und Menge der Steuerkomponenten wird in Abhängigkeit von den übrigen Reaktionsparametern (Emulsionstyp, Ausgangsverbindungen, Lösungsmittel etc.) so gewählt, daß Polykondensate mit den gewünschten Eigenschaften und der angestrebten Morphologie entstehen. Die erfindungsgemäße Steuerung des Sol-Gel-Prozesses ermöglicht insbesondere die Herstellung von dichten, kugelförmigen Partikeln mit homogener chemischer Zusammensetzung.

Als Ausgangsverbindungen für den Sol-Gel-Prozeß eignen sich z.B. lösliche Salze, Oxide, Hydroxide oder deren Mischungen von Elementen, die zur Bildung von Glas-, Glaskeramik- oder Keramiksystemen geeignet sind. Hierzu zählen insbesondere Elemente der Hauptgruppen I (z.B. Li, Na, K), II (z.B. Be, Mg, Ca, Sr, Ba), III (z.B. B, Al, Ga, In), IV (z.B. Si, Ge, Sn, Pb), V (z.B. P, As, Sb) und der Nebengruppen des Periodensystems, wie z.B. Ti, Zr, V, Mn, Nb, Ta, Cr, Mo, W, Fe, Co, Ni, Cu, Zn, und die Lanthaniden, z.B. Ce, La und Y.

Weitere geeignete Ausgangsverbindungen sind Komplexverbindungen der genannten Elemente, z.B. ß-Dicarbonyl-, Pyridin-, Amin- und EDTA-Komplexe.

Als Sole, die mit oder ohne Lösungsmittel als disperse Reaktionsphase eingesetzt werden können, eignen sich z.B. handelsübliche organische Sole (z.B. Wasserglas); peptisierte Sole von Al, Zr oder Ti; copräzipitierte Sole; komplexierte Sole, z.B. von Aluminiumacetylacetonat, Zirkoniumacetylacetonat, Titanacetat sowie Sole von Pyridinkomplexen, Triethanolaminkomplexen und EDTA-Komplexen; ferner nach üblichen Sol-Gel-Prozessen hergestellte Sole, z.B. $Na_2O/B_2O_3/SiO_2$ ( = Borosilicatglas) und andere. Die genannten Sole können gegebenenfalls mit funktionellen Dotierungskomponenten, z.B. Ag, versetzt werden.

Eine weitere Gruppe von Ausgangsverbindungen sind nach dem Sol-Gel-Prozeß vorkondensierte Präpolymere, z.B. Sol-Gel-Reaktionsprodukte von Alkoxiden, die mit einer geringeren als der zur vollständigen Hydrolyse der vorhandenen hydrolysierbaren Gruppen erforderlichen Wassermenge erhalten werden. Auf diese Weise lassen sich beliebige Zusammensetzungen einstellen, z.B. $Al_2O_3/SiO_2$ ( = Mullit), $ZrO_2/SiO_2$ ( = Zirkon), fast alle Glas- und Keramiksysteme, $ZrO_2$, $Y/ZrO_2$, TZP (tetragonal zirconia polycrystals), PSZ (partially stabilized zirconia), ZTA (zirconia toughened alumina), ZTN (zirconia toughened mullite), PZT (Bleizirkonattitanat), PLZT (Bleilanthanzirkonattitanat), sonstige Titanate und Ferrite.

Eine andere Gruppe geeigneter Ausgangsverbindungen sind sogenannte Hybrid-Oligomere, die kovalent oder über einen Komplexliganden an das anorganische Atom gebundene organische Reste aufweisen. Zu diesen Hybrid-Oligomeren zählen beispielsweise Oligomerisate von Organosilanen z.B. der Formel

$$R'_nSi(OR)_{4-n}$$

wobei R Alkyl bedeutet, R' Alkyl, Aryl, Glycidyl, Vinyl, Allyl, γ-Aminopropyl oder einen anderen organofunktionellen Rest darstellt und n den Wert 1 oder 2 hat. Diese und ähnliche Organosilane sind in den DE-OS 2758414, 3011761, 3407087, 3536716, 3736686, 3807419, 3826715 und 3828098 sowie der EP-A-78548 beschrieben, auf die gesamtinhaltlich Bezug genommen wird.

Mit Komplexliganden umgesetzte Hybrid-Oligomere sind z.B. in den DE-OS-3811185 und 3824333 beschrieben, auf deren Offenbarung ebenfalls Bezug genommen wird.

Die genannten komplexierten und präpolymerisierten Systeme umfassen auch Zusammensetzungen, die in organischen Lösungsmitteln, wie Methanol oder Toluol, löslich sind und sich deshalb für die reverse Emulsionspolymerisation eignen.

Die Sol-Gel-Reaktion erfolgt im erfindungsgemäßen Verfahren in einem zweiphasigen Emulsionssystem, das vorzugsweise durch Zusatz geeigneter Emulgatoren stabilisiert wird. Je nach der Art des Emulsionssystems werden herkömmliche Wasser-in-Öl-Emulgatoren, Öl-in-Wasser-Emulgatoren oder Alkohol-in-Öl-Emulgatoren eingesetzt. Hierbei handelt es sich gewöhnlich um dipolare Tenside.

Zur Verhinderung einer Agglomeration der über den Sol-Gel-Prozeß erzeugten Teilchen kann man dem Reaktionssystem herkömmliche Dispergatoren zusetzen, z.B. Schutzkolloide, wie Polyvinylalkohol, Polyacrylsäure, Polyacrylamide, Huminsäuren, Leim, Gelatine, Peptide oder Cellulosen.

Nach Beendigung des Sol-Gel-Prozesses kann man das Reaktionsgemisch mit einem Überschuß an Wasser versetzen und die entstandenen Partikel abfiltrieren. Um eine Agglomeration der Teilchen zu vermeiden, empfiehlt es sich, diese anschließend in einem organischen Lösungsmittel zu redispergieren und dann zu waschen und zu trocknen. Die Trocknung erfolgt im erfindungsgemäßen Verfahren vorzugsweise als Sprühtrocknung.

Die auf die vorstehend beschriebene Weise erhältlichen teilchenförmigen, vorzugsweise kugelförmigen, Polykondensate können in zahlreichen Anwendungsbereichen, z.B. für Glasfritten, keramische Schlicker und in Druckfarben sowie Siebdruckpasten eingesetzt werden.

Die folgenden Beispiele erläutern die Erfindung.

## Beispiel 1

(a) Herstellung eines in Toluol löslichen Aluminiumkomplexes

100 ml einer 1 molaren Lösung von Aluminium-tri-sek-butylat in Isopropanol werden mit 100 ml einer 1 molaren Lösung von Acetessigsäureethylester in Isopropanol versetzt und 30 Minuten gerührt. Der entstandene Komplex wird mit 100 ml 2 molarer $H_2O$/Isopropanol-Lösung quantitativ hydrolysiert. Hierbei entsteht ein klares Sol. Das Lösungsmittel wird im Vakuum abgezogen und das erhaltene Gelpulver 4 Stunden bei 50 °C getrocknet.

Die Löslichkeit des Gelpulvers in Toluol beträgt max. 1 g/ml.

(b) Herstellung eines in Toluol löslichen Zirkonium-komplexes (Komplexbildner: Acetessigsäureethyle-ster)

Unter Verwendung einer äquimolaren Menge Zirkonium-tetra-isopropylat wird gemäß Abschnitt (a) ein in Toluol lösliches Gelpulver hergestellt.

(c) Herstellung eines in Toluol löslichen Zirkoniumkomplexes (Komplexbildner: Methacrylsäure)

0,5 Liter einer 0,2 molaren Lösung von Zirkonium-tetra-isopropylat in Toluol/Isopropanol (50:50) werden mit 0,1 Mol Methacrylsäure versetzt und 1 Stunde gerührt. Der isopropylat-Methacrylsäure-Komplex wird mit 0,3 Mol $H_2O$ in 20 ml Isopropanollösung hydrolysiert, worauf man das Lösungsmittel in Vakuum entfernt und ein toluollösliches Gelpulver erhält.

(d) Herstellung eines in Toluol löslichen A $l_2O_3/ZrO_2$-Gelpulvers

Die in den Abschnitten (a) und (b) erhaltenen Gelpulver werden in Toluol gelöst, wobei das Molverhältnis Al:Zr beliebig wählbar ist. Beispielsweise kann eine Zusammensetzung entsprechend 20% $Al_2O_3$ und 80% $ZrO_2$ hergestellt werden.

(e) Herstellung von teilchenförmigen Polykondensaten durch Sol-Gel-Polykondensation in Emulsion

Toluollösungen der in den Abschnitten (a) bis (d) erhaltenen Gelpulver werden unter Verwendung eines O/W-Emulgators in Wasser emulgiert und unter Zugabe eines kationischen oder anionischen Phasentransferkatalysators als Quelle für die katalytisch wirksamen Steuerkomponenten $H^+$ bzw. $OH^-$ zu kugelförmigen Oxidteilchen polykondensiert.

**Beispiel 2**

Herstellung von Mullit

0,3 Mol Aluminium-tri-sek-butylat werden in 400 ml Methanol/HCl gelöst. Hierauf gibt man 0,15 Mol Tetraethylorthosilicat (TEOS) zu und mischt gründlich.

Die methanolische Lösung wird unter Zugabe eines Alkoholin-Öl-Emulgators in einem Überschu, Petrolether emulgiert und durch gesteuerte Zugabe von Wasser bzw. Wasserdampf vollständig zu Mullit-Teilchen hydrolysiert.

**Beispiel 3**

Herstellung von Cordierit

0,05 Mol Tetraethylorthosilicat (TEOS) werden in 30 ml Methanol/HCl gelöst, worauf man 0,04 Mol Aluminium-trisek-butylat, das gemä, Beispiel 1 (a) mit 0,02 Mol Acetessigsäureethylester komplexiert ist, und eine Lösung von 0,02 Mol $MgCl_2.6H_2O$ oder Magnesiumacetat in 15 ml Methanol zugibt.

Die erhaltene methanolische Lösung wird unter Zugabe eines Alkohol-in-Öl-Emulgators in Petrolether emulgiert und durch gesteuerte Zugabe von Wasser bzw. Wasserdampf vollständig zu Cordierit-Teilchen hydrolysiert.

**Ansprüche**

1. Verfahren zur Herstellung von teilchenförmigen Polykondensaten über den Sol-Gel-Prozeß, bei dem eine Sol-Gel-Reaktion (Polykondensation) mindestens einer ein anorganisches Netzwerk bildenden Verbindung in einem zweiphasigen System aus einer dispersen Reaktionsphase und einer damit im wesentlichen nicht mischbaren, kontinuierlichen Matrixphase durchgeführt wird dadurch **gekennzeichnet** , daß die Sol-Gel-Reaktion durch Zugabe von die Reaktion beeinflussenden oder daran teilnehmenden Steuerkomponenten über die Matrixphase gesteuert wird.

2. Verfahren nach Anspruch 1, dadurch gekennzeichnet, daß man für die disperse Reaktionsphase ein wässriges, alkoholisches oder wässrig-alkoholisches Lösungsmittel und für die kontinuierliche Matrixphase ein mit der Reaktionsphase im wesentlichen nicht mischbares organisches Lösungsmittel verwendet.

3. Verfahren nach Anspruch 1, dadurch gekennzeichnet, daß man für die disperse Reaktionsphase ein unpolares organisches Lösungsmittel und für die kontinuierliche Matrixphase ein wässriges Lösungsmittel verwendet.

4. Verfahren nach Anspruch 1, dadurch gekennzeichnet, daß man als disperse Reaktionsphase nicht-lösungsmittelhaltige Sole einsetzt.

5. Verfahren nach Anspruch 1, dadurch gekennzeichnet, daß man als kontinuierliche Matrixphase polymerisierbare organische Monomere oder Oligomere einsetzt.

6. Verfahren nach einem der Ansprüche 1 bis 5, dadurch gekennzeichnet, daß man als Steuerkomponenten Wasser, Säuren, Basen oder katalytisch wirksame Komponenten einsetzt, die in der Matrixphase löslich sind.

7. Verfahren nach einem der Ansprüche 1 bis 5, dadurch gekennzeichnet, daß man Steuerkomponenten einsetzt, die in der Matrixphase nicht oder nur sehr wenig löslich sind.

8. Verfahren nach einem der Ansprüche 1 bis 7, dadurch gekennzeichnet, daß man die Steuerkomponenten über die Gasphase oder als Lösung in die Matrixphase eindosiert.

9. Verfahren nach einem der Ansprüche 1 bis 7, dadurch gekennzeichnet, daß man die Steuerkomponenten in Form von schwerlöslichen, sich durch den Verbrauch nachlösenden Verbindungen einsetzt.

10. Verfahren nach einem der Ansprüche 1 bis 7, dadurch gekennzeichnet, daß man die Steuerkomponenten aus einem Vorratssystem, vorzugsweise einem beladenen Adsorbens, einem Ionenaustauscher oder einer Membran, an die Matrixphase abgibt.

11. Verfahren nach einem der Ansprüche 1 bis 10, dadurch gekennzeichnet, daß man als Ausgangsverbindungen lösliche Salze, Oxide, Hydroxide oder deren Mischungen von Elementen verwendet, die zur Bildung von Glas-, Glaskeramik- oder Keramiksystemen geeignet sind.

12. Verfahren nach Anspruch 11, dadurch gekennzeichnet, daß man Komplexverbindungen der genannten Elemente als Ausgangsverbindungen einsetzt.

13. Verfahren nach Anspruch 11 oder 12, dadurch gekennzeichnet, daß man nach dem Sol-Gel-Prozeß vorkondensierte Präpolymere der genannten Ausgangsverbindungen einsetzt.

14. Verfahren nach einem der Ansprüche 11 bis 13, dadurch gekennzeichnet, daß man Hybrid-Oligomere einsetzt, die kovalent oder über einen Komplexliganden an das anorganische Atom gebundene organische Reste aufweisen.

15. Verfahren nach einem der Ansprüche I bis 14, dadurch gekennzeichnet, daß man das zweiphasige System (Emulsion) durch Zusatz geeigneter Emulgatoren stabilisiert.

16. Verfahren nach einem der Ansprüche 1 bis 15, dadurch gekennzeichnet, daß man eine Agglomeration der über den Sol-Gel-Prozeß erzeugten Polykondensatteilchen durch Zusatz von Dispergatoren hemmt.

17. Verfahren nach einem der Ansprüche 1 bis 16 dadurch gekennzeichnet, daß man das Reaktionsgemisch nach Beendigung des Sol-Gel-Prozesses mit einem Überschuß an Wasser versetzt und anschließend das Produkt abfiltriert.

18. Verfahren nach Anspruch 17, dadurch gekennzeichnet, daß man das abfiltrierte Produkt zur Vermeidung einer Agglomeration in einem organischen Lösungsmittel redispergiert, dann wäscht und trocknet.

19. Verfahren nach einem der Ansprüche 1 bis 18, dadurch gekennzeichnet, daß man die über den Sol-Gel-Prozeß erzeugten Polykondensatteilchen durch Sprühtrocknung gewinnt.

20. Teilchenförmige, vorzugsweise kugelförmige, Polykondensate, erhältlich nach dem Verfahren eines der Ansprüche 1 bis 19.

21. Verwendung der Polykondensate nach Anspruch 20 als Glasfritten, keramische Schlicker oder in Druckfarben und Siebdruckpasten.